(19) Europäisches Patentamt
European Patent Office
Office européen des brevets

(11) Publication number: **0 168 149 A2**

# (12) EUROPEAN PATENT APPLICATION

(21) Application number: 85303718.2

(22) Date of filing: 28.05.85

(51) Int. Cl.⁴: G 01 L 1/22

(30) Priority: 30.05.84 GB 8413788

(43) Date of publication of application: 15.01.86 Bulletin 86/3

(84) Designated Contracting States: DE FR GB IT SE

(71) Applicant: TRW Transportation Electronics Limited
Phoenix Way
Cirencester Gloucestershire GL7 1YZ(GB)

(72) Inventor: Harbour, John
The Hawthorns Startley
Chippenham Wiltshire(GB)

(74) Representative: Lainé, Simon James et al,
Wynne-Jones, Lainé & James 22, Rodney Road
Cheltenham Gloucestershire. GL50 1JJ(GB)

## (54) Strain gauge bridge assembly.

(57) Strain gauges (R1, R2, R3, R4) are arranged in a bridge formation to eliminate errors. To reduce these further, particularly those arising from temperature variation, each branch of the bridge may be composed of a series of small gauges

$(R1_5, R2_5, R3_5, R4_5)$

and these are all spatially intermixed over the area of the transducer. Alternatively, the gauges (6, 8) are stacked on each other, with insultating film (7) between, to reduce the overall area, or pairs (9, 10) may be interdigitated and the pairs stacked with insulating film (11) between.

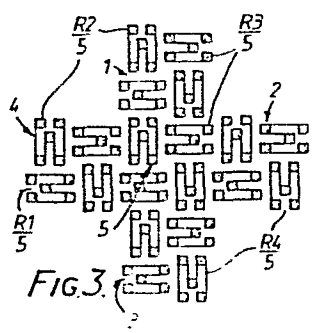

FIG.3.

EP 0 168 149 A2

... MODIFIED
see front page



IMPROVEMENTS RELATING TO STRAIN TRANSDUCERS

This invention relates to strain transducers. It concerns those using strain gauges in the form of resistive elements which are attached to a member which undergoes strain and change in resistance in response to changes of strain.

A problem with such gauges is that other factors can cause a change in resistance, notably variations in temperature. This can give false readings, unless measures are taken to counteract it.

A certain amount of correction or reduction of the problem can be achieved by suitable choice of material for the strain gauges, and their arrangement. In particular, a bridge formation can automatically eliminate certain errors. However, as will be described later, absolute accuracy cannot be attained, but it is the aim of this invention to approach that ideal.

According to one aspect of the present invention there is provided a strain gauge bridge assembly wherein each arm of the bridge comprises a plurality of similarly orientated, series-connected resistive strain gauges, the gauges of all the arms having an inter-mixed and substantially similar distribution

over a limited plane area.

In other words, instead of a single resistive element forming each arm of the bridge, it is split up into a scattered group of lesser elements, both in resistance and size. The mixed distribution ensures that variations in temperature over the area of the bridge will affect the fragmented arms substantially equally.

The gauges will still normally be conductive depositions on an insulating substrate. The connections between them may then be a conductive pattern deposited on an insulating layer over the substrate, with holes through the layer for the actual contact with the gauges.

According to another aspect of the present invention there is provided a strain gauge bridge assembly wherein the arms of the bridge are resistive strain gauges in a stack with interposed insulating layers.

In other words, instead of distributing them at different locations over an area on the workpiece, they all occupy substantially the same location, and will not therefore be subject to noticeably different temperatures. The gauges and the insulating layers can

be so thin that there will be no loss of sensitivity in the gauges at the top of the stack, farthest from the workpiece.

According to a further aspect of the present invention there is provided a strain gauge bridge assembly wherein the arms of the bridge are resistive strain gauges with finger formations, each pair of opposite arms having the fingers of their gauges interdigitated, and one pair being mounted over the other with an interposed insulating layer.

The finger formation is conventional in deposited strain gauges. This arrangement also means that the elements all occupy substantially the same locations and are subject to virtually identical temperatures.

These two versions may also mean that the total area of the transducer is reduced.

For a better understanding of the present invention some embodiments will now be described, by way of example, with reference to the accompanying drawing, in which:

Figure 1 is a plan view of a conventional strain transducer.

Figure 2 is a circuit diagram of the transducer of Figure 1.

Figure 3 is a plan view of a transducer for counteracting temperature variations.

Figure 4 is a plan view of another such transducer half constructed, and

Figure 5 is a plan view of a third such transducer half constructed.

First, the effect of temperature on a strain gauge will be discussed.

A strain gauge is a resistive element attached to a member which undergoes strain. This strain, transferred to the strain gauge, causes a change in resistance. Suppose:

L = unstrained length of the member

$L + \delta L$ = strained length of the member

R = unstrained resistance of the gauge

$R + \delta R$ = strained resistance of the gauge

The gauge factor GF is defined as the fractional change in resistance divided by strain:

$$GF = \frac{\delta R}{R} \div \frac{\delta L}{L} \simeq 2$$

The GF is approximately 2 due to geometrical considerations and Poisson's Ratio.

Strain gauges are subject to thermal effects, which generally manifest themselves as a temperature

coefficient of resistance which is substantially constant over at least a small range of temperatures about the normal operating temperature of the gauge.

Suppose:

$T$ = initial temperature of the unstrained member

$T + \delta T$ = final temperature of the unstrained member

$R$ = initial resistance of gauge at temperature T

$R + \delta R$ = resistance of gauge at temperature $T + \delta T$

The temperature coefficient of resistance TCR is defined as the fractional change in resistance per degree:

$$TCR = \frac{\delta R}{R} \div \delta T$$

Thus for a given single resistive strain gauge element of resistance R exhibiting a change of resistance $\delta R$ it might be assumed that this is due to a strain S given by:

$$S = \delta R/R \div GF$$

but it may in fact be due to a temperature change $\delta T$ given by: $\delta T = \delta R/R \div TCR$

The figure of $\frac{S}{\delta T}$, the apparent strain per degree is

thus given by $\frac{S}{\delta T} = \frac{\delta R/R \div GF}{\delta R/R \div TCR} = TCR/GF$

which should be made as small as possible (ideally zero) by choice of a low TCR, or by an increase of GF. Practical experience shows that GF is higher than the factor 2 for certain non-metallic strain gauges, but these also have a high TCR.

One well known method of reducing TCR to zero is the use of a strain gauge bridge with four active arms. Application of strain reduces the resistance of two opposite arms, increases the resistance of the other two, and produces an unbalanced output. In the usual case all gauges are nominally equal at zero strain and the output of the bridge Vo is given by:

$$\frac{Vo}{Vs} = GF \times \delta L/L = GF \times S$$

where Vs is the supply voltage to the bridge.

A change in temperature of the gauges which affects all equally does not cause a bridge unbalance or an output, provided that all the gauges have exactly the same TCR. But with temperature gradients in the workpiece, equal temperatures at all the gauges are unlikely, and with many gauges the TCR's are not necessarily absolutely identical. There will generally be a small signal due to temperature change, the net apparent strain per degree.

Nichrome gauges have sufficiently nearly identical TCR's to allow temperature ranges in the order - 40°C to + 85°C with only very small net apparent strains per degree. However, this performance is only achieved after some time has elapsed from the occurrence of a temperature change. There is a delay before all parts of the transducer and the strained member actually attain the same temperature. As a result, a transient apparent strain appears. This is particularly noticeable in the case of an embedded transducer, such as that described in British Patent No. 2056624B or in our European Patent Application Publication No.0129331 although it is not so significant with an unembedded device. This is likely to be because the strained member in which the transducer is embedded provides a low impedance thermal environment which can easily impress a temperature gradient on the transducer, while air surrounding an unembedded transducer is a high impedance thermal environment.

Real environments for the embedded transducer include power axles of trucks where temperature stability is seldom if ever achieved due to varying power dissipation in components such as differential drives and brake drums.

To reduce the transient apparent strain of a bridge, Constantan gauges can be used instead of Nichrome ones, and their much smaller TCR gives rise to lower apparent strain per degree and hence to reduced transient apparent strain.

Another approach is to reduce the net temperature difference between the gauges. This can be done by making the gauges very much smaller. However, size reduction is limited by production techniques, and in any case it is always desirable to increase the gauge resistance to reduce power consumption, which leads to an increase in size.

Figures 1 and 2 illustrate a known type of strain transducer, Figure 1 showing its physical appearance and Figure 2 its electrical circuit, the corresponding parts being similarly referenced. Four equal gauges R1, R2, R3 and R4 form a bridge with terminals A, B, C and D. It will be seen that, even reduced to a small size, the differently positioned gauges may well be subject to different temperatures.

Figure 3 shows a transducer electrically equivalent to Figure 2, but each arm of the bridge consists of a set of five small resistors in series, referenced $\frac{R1}{5}$, $\frac{R2}{5}$, $\frac{R3}{5}$ and $\frac{R4}{5}$ to indicate the

correspondence. The small resistors of each set are not grouped together, but are distributed with the resistors of the other sets over the fingers 1, 2, 3 and 4 and centre 5 of a cross like area, each finger and the centre having one small resistor from each set. They can be readily identified in the Figure by their different orientations. They are formed in the same way, by deposition, as larger gauges, and when this has been done they are masked by a thin insulating layer. Conductive bands are formed on this, and connections made to the gauges by holes through the mask, to complete the bridge formation.

It will be appreciated that temperature variations over the area of the transducer will affect each composite gauge substantially equally, by virtue of their almost uniform distribution.

Figure 4 also shows part of a transducer electrically equivalent to Figure 2, but each arm is a single resistive element. However, instead of arranging these elements as in Figure 1, a first gauge 6 is formed singly on a substrate and a film of insulation 7 is laid over that. A second gauge 8 is then formed on this film, followed by further insulation and gauges (not shown) in succession until a stack of four is complete. The Figure shows an

intermediate stage of the construction but it will be understood that each gauge will be oriented at right angles to the adjacent ones, and that holes through the insulating layers will be provided for the necessary connections.

In Figure 5, use is made of the configuration of a strain gauge with fingers. Two gauges 9 and 10 are formed on a substrate so that the fingers interdigitate as shown. An insulating layer 11 is then provided to receive a similarly interdigitated pair (not shown) on top, but oriented at right angles. Again, holes through the insulating layer will be provided for the necessary connections.

In Figures 4 and 5, the total area of the transducer is very substantially reduced from the conventional size, thus making the influence of any temperature gradient considerably less.

CLAIMS

1. A strain gauge bridge assembly characterised in that each arm of the bridge comprises a plurality of similarly oriented, series connected resistor strain gauges ($\frac{R1}{5}$, $\frac{R2}{5}$, $\frac{R3}{5}$, $\frac{R4}{5}$), the gauges of all the arms having an intermixed and substantially similar distribution over a limited plane area.

2. An assembly as claimed in Claim 1, characterised in that the area is in the form of a cross and each finger (1, 2, 3, 4) thereof has a gauge from each arm.

3. An assembly as claimed in Claim 2, characterised in that the centre (5) of the cross has a gauge from each arm.

4. A strain gauge bridge assembly characterised in that the arms of the bridge are resistive strain gauges (6, 8) in a stack with interposed insulating layers (7).

5. A strain gauge bridge assembly characterised in that the arms of the bridge are resistive strain gauges (9, 10) with finger formations, each pair of opposite arms having the fingers of their gauges interdigitated, and one pair being mounted over the other with an interposed insulating layer (11).

6. A strain gauge assembly as claimed in any preceding claim, characterised in that the gauges are depositions on a substrate or insulating layer.

1/1

0168149

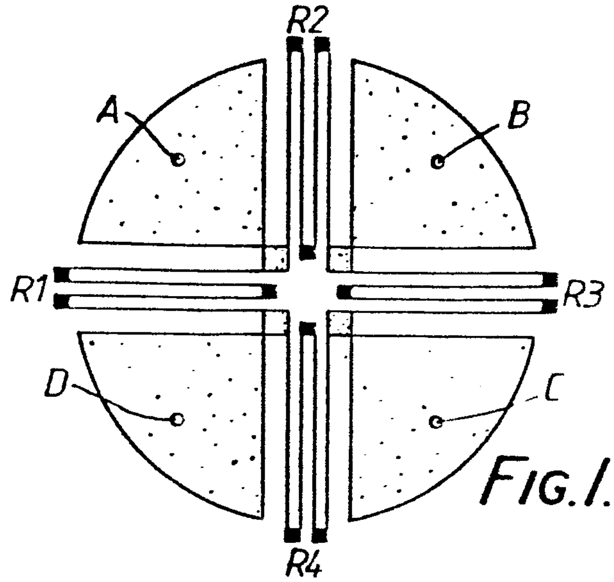


FIG.1.

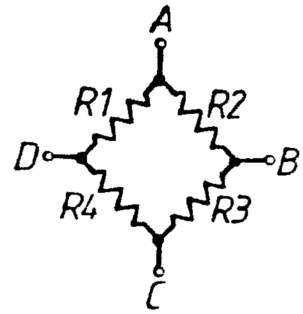


FIG.2.

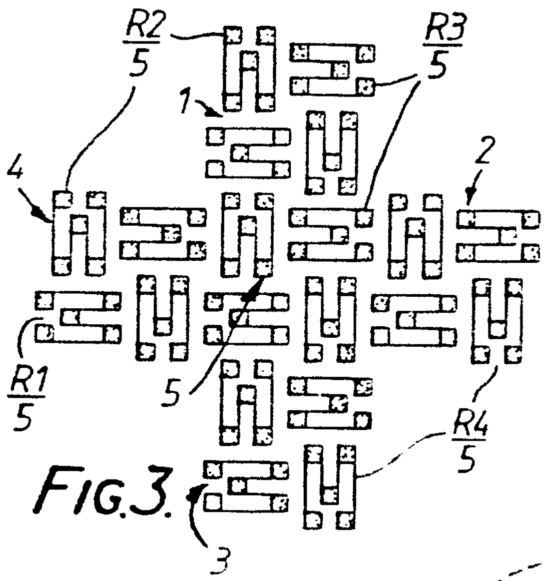


FIG.3.

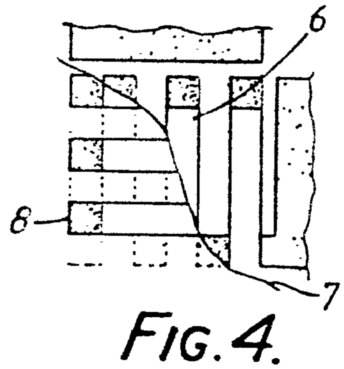


FIG.4.

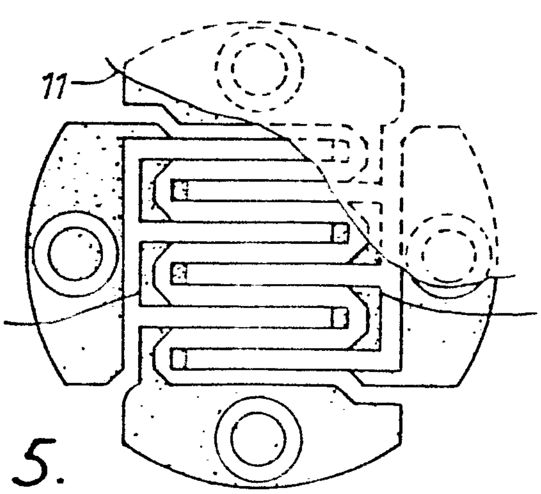


FIG.5.